# EUROPÄISCHE PATENTANMELDUNG

(11) **EP 1 674 712 A2**
(43) Veröffentlichungstag der Anmeldung: **28.06.2006**
(21) Anmeldenummer: 05109521.4
(22) Anmeldetag: 13.10.2005
(51) Int. Cl.: F02M 35/10, F02D 9/10

(54) **Saugrohranlage für eine Mehrzylinder-Brennkraftmaschine**

(30) Priorität: 22.12.2004 DE 102004063017
(71) Anmelder: MANN+HUMMEL GmbH, 71638 Ludwigsburg (DE)
(72) Erfinder: Stürwald, Ludger, 71069, Sindelfingen (DE); Ritter, Heiko, 74842, Billigheim-Sulzbach (DE); Fröhlich, Andreas, 74206, Bad Wimpfen (DE)

(57) **Zusammenfassung**

Eine SaugrohranIage (1) für eine Mehrzylinder-Brennkraftmaschine, bei der jedem Zylinder über jeweils ein Saugrohr VerbrennungsIuft zuführbar ist, umfasst in den Saugrohren jeweils eine einstellbare DraIIkIappe (4) zur Regulierung der einströmenden Verbrennungsluft. Mindestens zwei DraIIkIappen (4), die den Zylindern einer gemeinsamen Zylinderbank zugeordnet sind, sind an einer gemeinsamen SteIIweIIe (3) gehalten und von dieser zu verstellen. Die SteIIweIIe (3) ist zweigeteilt, wobei die beiden WeIIenabschnitte (3a,3b) über ein KuppIungsgIied (5) miteinander verbunden sind. Das Kupplungsglied (5) sorgt für eine feste Verbindung zwischen den Benachbarten WeIIenabschnitten (3a,3b). Gleichzeitig ist es möglich, einen Versatz zwischen den beiden Wellenabschnitten auszugleichen und zwar sowohl in Achsrichtung als auch in Radialrichtung. Gegebenenfalls kann auch ein Versatz zwichen den beiden Wellenabschnitten (3a,3b) kompensiert werden.

## Beschreibung

Die Erfindung bezieht sich auf eine Saugrohranlage für eine Mehrzylinder-Brennkraftmaschine nach dem Oberbegriff des Anspruches 1.

Eine Saugrohranlage, über die den Zylindern einer Brennkraftmaschine Verbrennungsluft zuführbar ist, wird in der Druckschrift DE 42 28 334 A1 beschrieben. Die Saugrohranlage ist für eine Brennkraftmaschine mit zwei parallel verlaufenden Zylinderbänken ausgebildet, wobei den Zylindern jeder Zylinderbank über jeweils ein Einzelsaugrohr Verbrennungsluft zuzuführen ist. Die Luftzufuhr wird mit Hilfe von Schwenkklappen reguliert, welche für jeweils eine Zylinderbank an einer gemeinsamen, drehbar gelagerten Stellwelle gehalten sind und im Strömungsquerschnitt der Einzelsaugrohre angeordnet sind. Durch ein Verdrehen der Stellwelle werden die Schwenkklappen zwischen einer geschlossenen und einer geöffneten Position verstellt.

Die Stellwelle ist an mehreren Lagerstellen im Saugrohrgehäuse drehbar gelagert. Problematisch ist jedoch, dass insbesondere bei großen Brennkraftmaschinen wie z. B. V8- oder V12-Motoren die Stellwelle sich über die Länge von 4 bzw. 6 in einer Reihe angeordneten Zylindern erstrecken muss und eine entsprechend große Länge aufweist, wodurch die Gefahr erhöht ist, dass in den Lagerstellen eine hohe Reibung entsteht. Insbesondere bei thermischer Ausdehnung kann die Reibung so stark anwachsen, dass die Schwenkbewegung der Stellwelle und der Klappen beeinträchtigt wird.

Der Erfindung liegt das Problem zugrunde, eine einfach aufgebaute Saugrohranlage für eine Brennkraftmaschine zu schaffen, die sich durch eine lange Betriebsdauer und hohe Funktionstüchtigkeit auszeichnet. Es soll insbesondere ein einwandfreies Funktionieren der die Luftzufuhr regulierenden, beweglichen Bauteile in der Saugrohranlage gewährleistet sein.

Dieses Problem wird erfindungsgemäß mit den Merkmalen des Anspruches 1 gelöst. Die Unteransprüche geben zweckmäßige Weiterbildungen an.

Die Stellwelle, an der die Drallklappen gehalten sind und die im Saugrohrgehäuse beweglich gelagert ist, umfasst zwei separate Wellenabschnitte, die über ein Kupplungsglied miteinander verbunden sind. Über das Kupplungsglied ist eineriseits eine Bewegungsübertragung vom ersten Wellenabschnitt auf den zweiten Wellenabschnitt möglich, so dass es ausreicht, nur einem der beiden Wellenabschnitte eine Stellbewegung aufzuprägen, welche dann über das Kupplungsglied auch auf den benachbarten Wellenabschnitt übertragen wird. Zugleich ermöglicht aber das Kupplungsglied einen Toleranz- bzw. Spielausgleich, wodurch die Gefahr insbesondere bei langen Stellwellen mit einer entsprechend großen Anzahl an Lagerstellen erheblich reduziert ist, dass die Bewegung der Stellwelle durch hohe Lagerreibung beeinträchtigt wird. Jeder Wellenabschnitt weist für sich genommen nur eine vergleichsweise geringe Länge mit einer entsprechend reduzierten Anzahl an Lagerstellen auf, über die Reibung auf die Welle einwirken kann. Aufgrund der geringeren Anzahl an Lagerstellen kann ein kleineres Spaltmaß bzw. eine kleinere Toleranz von Lagerstelle zu Lagerstelle realisiert werden, wodurch auch die Gefahr von Fehlluftströmen reduziert ist.

In der Regel üben die beiden zusammenwirkenden Wellenabschnitte eine Drehbewegung als Stellbewegung aus. Demgemäß sind die beiden Wellenabschnitte über das Kupplungsglied drehfest miteinander verbunden. Gegebenenfalls kommt aber auch eine Stellbewegung in Achsrichtung in Frage.

Das Kupplungsglied sorgt vorteilhaft für eine feste Verbindung zwischen den benachbarten Wellenabschnitten. Jedoch ist es möglich, einen Versatz zwischen den beiden Wellenabschnitten mit Hilfe des Kupplungsgliedes auszugleichen, insbesondere ein Spiel in Achsrichtung und/oder einen Versatz in Radialrichtung. Gegebenenfalls kann aber auch ein Winkelversatz zwischen den beiden Wellenabschnitten kompensiert werden. Im Falle eines Radialversatzes darf über das Kupplungsglied in Radialrichtung keine vollständig feste Verbindung gegeben sein, vielmehr ist es erforderlich, dass die beiden Wellenabschnitte über das Kupplungsglied in Radialrichtung mit Spiel aneinander gekoppelt sind. Eine derartige Verbindung mit Spiel kann aber auch in Achsrichtung, gegebenenfalls auch in Umfangsrichtung, vorteilhaft sein.

In einer bevorzugten Ausführung trägt jeder Wellenabschnitt mindestens zwei Drallklappen für jeweils einen Zylinder, so dass insgesamt mindestens vier Zylinder in einer Reihe angeordnet sind, denen die beiden zusammenwirkenden Wellenabschnitte zugeordnet sind. Die jeweils in Achsrichtung gesehen innen liegenden Drallklappen sind axial an zumindest jeweils einem Lagerabschnitt fixiert, wodurch auch der betreffende Wellenabschnitt in diesem Bereich in Achsrichtung festgelegt ist. Die jeweils außen liegenden Drallklappen sind dagegen nicht axial fixiert, sondern besitzen vielmehr eine axiale Beweglichkeit auf dem Wellenabschnitt. Aufgrund der axialen Lagefixierung der im Bereich des verbindenden Kupplungsgliedes angeordneten Drallklappen werden Relativbewegungen zwischen den beiden Wellenabschnitten erheblich eingeschränkt, so dass eine sichere und feste Verbindung zwischen den Wellenabschnitten über das Kupplungsglied gegeben ist. Die außen liegenden Drallklappen besitzen dagegen auch in Achsrichtung ein geringes Spiel, so dass insbesondere die Wellenabschnitte in diesen Bereichen auch eine entsprechende toleranzausgleichende Bewegungsmöglichkeit aufweisen.

Zweckmäßig ist jeder Wellenabschnitt in mehreren Lagerabschnitten drehbar gelagert, die mit dem Saugrohrgehäuse zu verbinden oder einteilig mit dem Saugrohrgehäuse ausgebildet sind. Die Drallklappen sind jeweils unmittelbar zwischen zwei benachbarten Lagerabschnitten gehalten und erfahren hierdurch eine bestmögliche Lagerung, wodurch die Bewegungstoleranzen der Drallklappen verringert werden.

Das Kupplungsglied sitzt an einer Stirnseite eines ersten Wellenabschnittes auf und nimmt in einer topfförmigen Aufnahme das korrespondierende stirnseitige Ende des zweiten Wellenabschnittes auf. Ist die Stellbewegung der Drallklappen als rotatorische Bewegung ausgeführt, so reicht es grundsätzlich aus, wenn über das Kupplungsglied eine drehfeste Verbindung zwischen den beiden Wellenabschnitten realisiert wird, wobei gegebenenfalls in Achsrichtung eine einfache Steckverbindung ohne feste Verbindung ausreichend sein kann.

Weitere Vorteile und zweckmäßige Ausführungen sind den weiteren Ansprüchen, der Figurenbeschreibung und den Zeichnungen zu entnehmen. Es zeigen:
- Fig. 1: eine Draufsicht auf eine Saugrohranlage für eine Vierzylinder-Brennkraftmaschine oder eine Zylinderbank eines V8-Motors, darge-stellt mit einer Stellwelle und vier an der Stellwelle gehaltenen Drallklappen,
- Fig. 2: eine Seitenansicht der Saugrohranlage,
- Fig. 3: einen Schnitt durch die Saugrohranlage gemäß Schnittlinie III-III aus Fig. 1,
- Fig. 4: einen Wellenabschnitt der Stellwelle mit einem stirnseitig aufgesetzten Kupplungsglied,
- Fig. 5: eine perspektivische Ansicht der aus zwei Wellenabschnitten zusammengesetzten Stellwelle einschließlich der die Welle aufnehmenden Lagerabschnitte,
- Fig. 6: eine Ansicht auf die Stirnseite der Saugrohranlage.

In den Figuren sind gleiche Bauteile mit gleichen Bezugszeichen versehen.

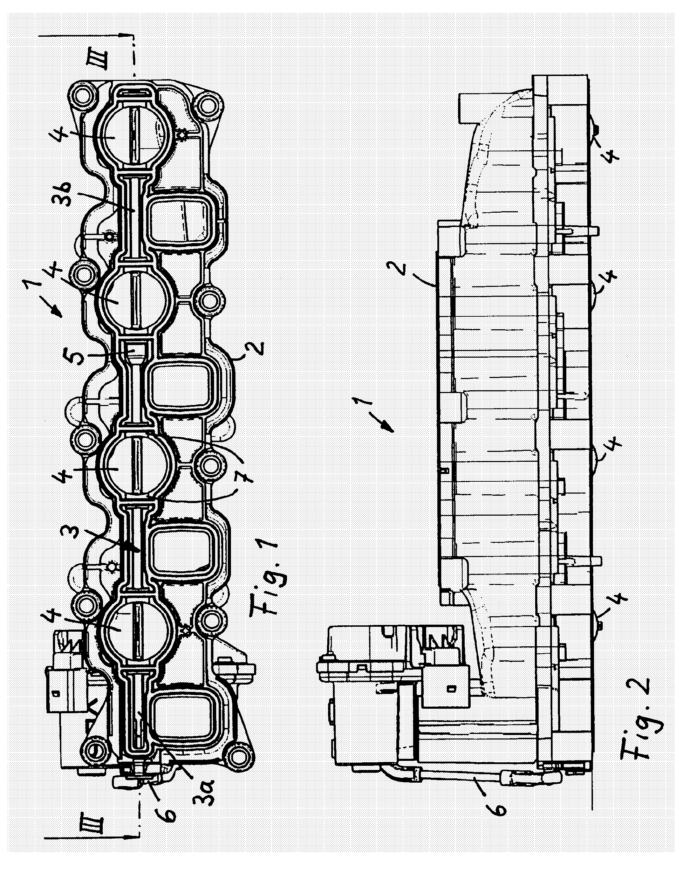

Die in Fig. 1 in Draufsicht dargestellte Saugrohranlage 1 ist für einen Einsatz in einer Brennkraftmaschine vorgesehen, insbesondere in einem Dieselmotor, wobei gegebenenfalls auch ein Ottomotor in Frage kommt, und dient der Zufuhr von Verbrennungsluft in die Zylinder der Brennkraftmaschine. Die Saugrohranlage 1 weist in einem Saugrohrgehäuse 2 eine drehbar gelagerte Stellwelle 3 auf, welche zweigeteilt ist und zwei Wellenabschnitte 3a und 3b umfasst, die über ein Kupplungsglied 5 miteinander drehfest verbunden sind. Jeder Wellenabschnitt 3a bzw. 3b der Stellwelle 3 trägt jeweils zwei Drallklappen 4, die drehfest auf der Stellwelle 3 aufsitzen. Die Drallklappen sitzen in jeweils einem Einzelsaugrohr, über das jedem Zylinder der Brennkraftmaschine Verbrennungsluft zuzuführen ist. Durch eine Drehung der Stellwelle um die Längsachse werden die Drallklappen 4 zwischen einer Schließposition und einer Öffnungsposition verstellt. Der Antrieb erfolgt im Bereich einer Stirnseite der Stellwelle über ein Pleuel 6, über das die Bewegung einer Nockenwelle bzw. eines sonstigen, rotierenden Bauteils der Brennkraftmaschine auf die Stellwelle 3 übertragen wird. Gegebenenfalls kommt auch ein separater, von der Brennkraftmaschine unabhängiger Antrieb für die Stellwelle in Betracht.

Das Kupplungsglied 5, welches die beiden Wellenabschnitte 3a und 3b miteinander verbindet, sitzt auf der Stirnseite des ersten Wellenabschnittes 3a auf und ist topfförmig ausgebildet, wobei die benachbarte Stirnseite des zweiten Wellenabschnittes 3b in die Topfaufnahme des Kupplungsgliedes 5 eingesetzt und dort drehfest aufgenommen ist. Das Kupplungsglied 5 besteht insbesondere aus Kunststoff. Jeder Wellenabschnitt 3a bzw. 3b trägt die gleiche Anzahl an Drallklappen 4, jedoch sind die beiden Wellenabschnitte nicht identisch lang, vielmehr erstreckt sich der erste Wellenabschnitt 3a im Vergleich zum zweiten Wellenabschnitt 3b über einen zusätzlichen Gehäuseabschnitt. Jeder Wellenabschnitt 3a bzw. 3b ist in einer Mehrzahl von Lagerabschnitten 7 drehbar gelagert. Jeweils zwei Lagerabschnitte 7 fassen jeweils eine Drallklappe 4 axial ein. Hierdurch sind die Drallklappen 4 besonders gut gelagert und besitzen ein entsprechend geringes Spiel. Die beiden axial innen liegenden Drallklappen, welche unmittelbar benachbart sind und unterschiedlichen Wellenabschnitten 3a bzw. 3b angehören, sind axial über die Lagerabschnitte 7 fixiert, so dass diese Drallklappen in Achsrichtung keine Relativbewegung gegenüber den tragenden Wellenabschnitten ausführen können. Die außen liegenden Drallklappen 4 besitzen dagegen ein geringfügiges axiales Spiel. Die Lagerabschnitte 7 werden mit dem Saugrohrgehäuse 2 verbunden.

Wie der Seitenansicht nach Fig. 2 zu entnehmen, ist das Saugrohrgehäuse 2 der Saugrohranlage 1 deckelförmig ausgebildet, wobei die Drallklappen 4 sich im Bereich der Unterseite des Saugrohrgehäuses befinden.

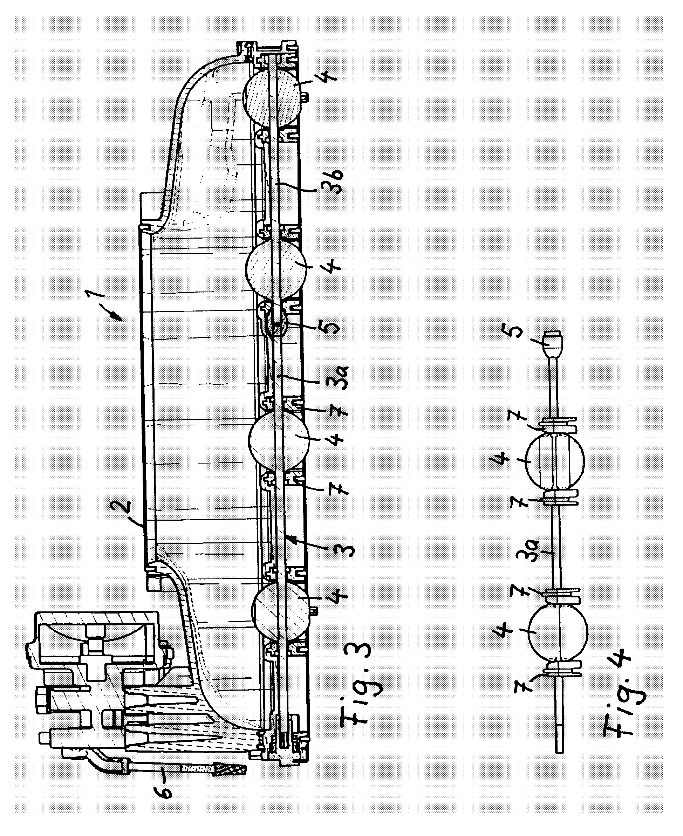

In Fig. 3 ist die Saugrohranlage 1 im Schnitt dargestellt. Die beiden Wellenabschnitte 3a und 3b besitzen eine gemeinsame Längsachse, wobei über das verbindende Kupplungsglied 5 gegebenenfalls ein Versatz zwischen den Achsen beider Wellenabschnitte ausgeglichen werden kann.

In Fig. 4 ist der erste Wellenabschnitt 3a gezeigt, an dessen einer Stirnseite das Kupplungsglied 5 aufsitzt, wohingegen an der gegenüberliegenden Stirnseite der Antrieb für die Drehstellbewegung der Stellwelle angreift.

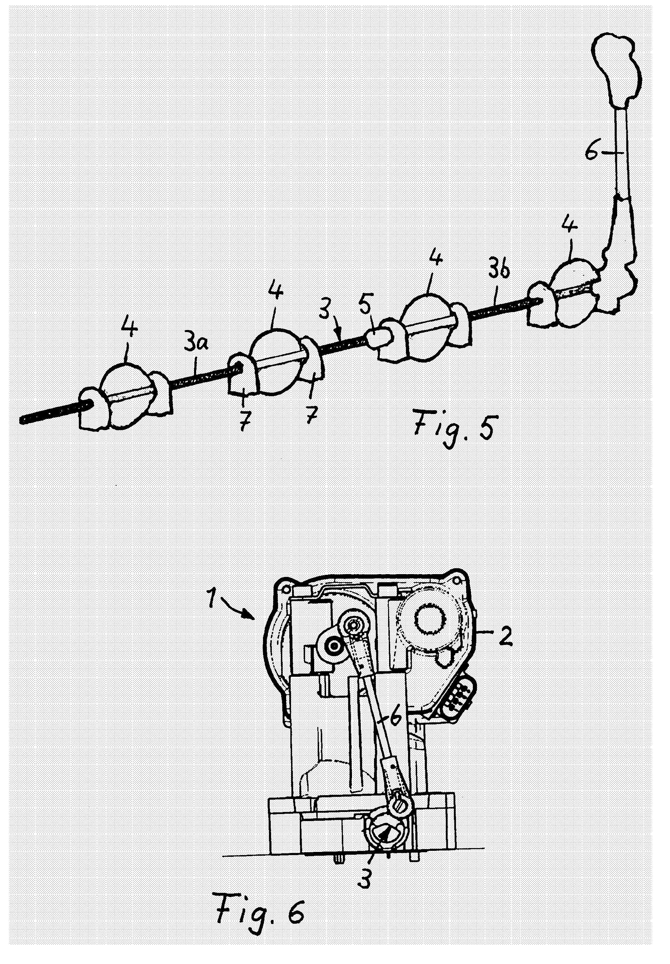

Fig. 5 zeigt die Stellwelle 3 in einer geringfügig modifizierten Ausführung, gemäß der das antreibende Pleuel 6 an der Stirnseite des kürzeren, zweiten Wellenabschnittes 3b angreift.

Wie der stirnseitigen Ansicht der Saugrohranlage 1 in Fig. 6 zu entnehmen, stellt das Pleuel 6 eine Antriebsverbindung von einer Nockenwelle oder dergleichen umdrehenden Welle mit der Stellwelle 3 her, wobei die Stellwelle 3 im unteren Gehäuseabschnitt der Saugrohranlage verläuft und die antreibende Welle im oberen Abschnitt des Gehäuses.

## Patentansprüche

1. Saugrohranlage für eine Mehrzylinder-Brennkraftmaschine, wobei jedem Zylinder der Brennkraftmaschine über jeweils ein Saugrohr Verbrennungsluft zuführbar ist und in den Saugrohren jeweils eine einstellbare Drallklappe (4) zur Regulierung der einströmenden Verbrennungsluft angeordnet ist, und wobei mindestens zwei Drallklappen (4), die den Zylindern einer gemeinsamen Zylinderbank zugeordnet sind, an einer gemeinsamen Stellwelle (3) gehalten und von der Stellwelle (3) zu verstellen sind, welche in Lagern verstellbar gelagert ist, **dadurch gekennzeichnet, dass** die Stellwelle (3) zweigeteilt ist und zumindest zwei Wellenabschnitte (3a, 3b) umfasst, die über ein Kupplungsglied (5) miteinander verbunden sind, wobei jeder Wellenabschnitt (3a, 3b) mindestens einem Zylinder der Zylinderbank zugeordnet ist und die beiden Wellenabschnitte (3a, 3b) zumindest annähernd koaxial verlaufen.

2. Saugrohranlage nach Anspruch 1, **dadurch gekennzeichnet, dass** das Kupplungsglied (5) an der Stirnseite eines Wellenabschnitts (3a) befestigt ist und die Stirnseite des zweiten Wellenabschnitts (3b) drehfest aufnimmt.

3. Saugrohranlage nach Anspruch 1 oder 2, **dadurch gekennzeichnet, dass** jeder Wellenabschnitt (3a, 3b) mindestens zwei Drallklappen (4) für jeweils einen Zylinder trägt.

4. Saugrohranlage nach Anspruch 3, **dadurch gekennzeichnet, dass** die jeweils axial innen liegenden Drallklappen (4) in Achsrichtung an wenigstens einem Lager fixiert sind.

5. Saugrohranlage nach einem der Ansprüche 1 bis 4, **dadurch gekennzeichnet, dass** die Lager Lagerabschnitte (7) umfassen, in denen die Wellenabschnitte (3a, 3b) drehbar gelagert sind, wobei die Lagerabschnitte (7) mit dem Saugrohrgehäuse (2) zu verbinden sind.

6. Saugrohranlage nach Anspruch 5, **dadurch gekennzeichnet, dass** jede Drallklappe (4) zwischen zwei Lagerabschnitten (7) eingefasst ist.

7. Saugrohranlage nach einem der Ansprüche 1 bis 6, **dadurch gekennzeichnet, dass** das Kupplungsglied (5) topfförmig ausgebildet ist, wobei in der offene Topfseite ein stirnseitiges Ende eines Wellenabschnitts (3b) drehfest aufgenommen ist.

8. Saugrohranlage nach einem der Ansprüche 1 bis 7, **dadurch gekennzeichnet, dass** das Kupplungsglied (5) aus Kunststoff gefertigt ist.
